(19) Europäisches Patentamt
European Patent Office
Office européen des brevets

(11) **EP 2 766 426 B1**

(12) **EUROPEAN PATENT SPECIFICATION**

(45) Date of publication and mention of the grant of the patent:
**16.01.2019 Bulletin 2019/03**

(21) Application number: **12770513.5**

(22) Date of filing: **15.10.2012**

(51) Int Cl.:
***C08L 23/06*** *(2006.01)* ***C08J 5/00*** *(2006.01)*
***B82Y 30/00*** *(2011.01)* ***C08J 3/20*** *(2006.01)*
***C08K 9/04*** *(2006.01)* ***C08K 9/06*** *(2006.01)*
***C09C 3/10*** *(2006.01)* ***C09C 3/12*** *(2006.01)*
***C08L 23/02*** *(2006.01)* ***B82Y 40/00*** *(2011.01)*
***C08K 3/04*** *(2006.01)* ***C01B 32/174*** *(2017.01)*

(86) International application number:
**PCT/EP2012/070418**

(87) International publication number:
**WO 2013/053946 (18.04.2013 Gazette 2013/16)**

(54) **NANOCOMPOSITE**
NANOVERBUNDWERKSTOFF
NANOCOMPOSITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2011 EP 11185122**

(43) Date of publication of application:
**20.08.2014 Bulletin 2014/34**

(73) Proprietor: **Total Research & Technology Feluy**
**7181 Seneffe (BE)**

(72) Inventors:
- **BOUVY, Claire**
  **B-5060 Moignelée (BE)**
- **LHOST, Olivier**
  **B-7021 Havré (BE)**
- **DUPIRE, Marc**
  **B-7022 Hyon (BE)**
- **NAVEZ, Pascal**
  **B-6140 Fontaine l'Evêque (BE)**
- **DELHALLE, Joseph**
  **B-5380 Noville-les-Bois (Fernelemont) (BE)**
- **MEKHALIF, Zineb**
  **B-5000 Namur (BE)**
- **DETRICHE, Simon**
  **B-5310 Bolinne-Harlue (BE)**

(74) Representative: **Raboin, Jean-Christophe et al**
**Total Research & Technology Feluy**
**Zone Industrielle C**
**7181 Seneffe (BE)**

(56) References cited:
**EP-A1- 2 028 218**
**WO-A1-2005/014708**
**WO-A1-2011/107495**
**US-A1- 2006 167 139**
**US-A1- 2008 274 356**
**US-A1- 2008 300 364**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 766 426 B1

## Description

### Field of the invention

The present invention relates to a nanocomposite comprising nanoparticles. The present invention also relates to a process for the preparation of said nanocomposite.

### Background of the invention

Nanoparticles offer interesting and frequently unexpected properties because their properties are rather the result of the surface of the particles than of the bulk volume. For example, nanoparticles can show surprising mechanical, optical and electrical properties, even at low concentrations. The properties of nanoparticles have attracted interest in polymer science, particularly for polymer reinforcement. Particular attention has been focused on carbon nanotubes (CNTs).

An important factor in polymer reinforcement is the nanoparticles' distribution in the polymer. It is believed that the nanoparticles, and in particular carbon nanotubes, should ideally be uniformly distributed in the polymer and each nanoparticle individually coated with the polymer so that an efficient load transfer to the nanoparticles can be achieved. Lack of homogeneity, i.e. uneven distribution of the nanoparticles, may create weak spots and an uneven distribution of stress, in consequence leading at best to only marginal increases in mechanical properties.

Due to difficulties in dispersion, the hopes of drastically improving the polymer's mechanical properties by the incorporation of nanoparticles have not yet been fulfilled. Hence, the need to improve the distribution of nanoparticles in polymers remains. Several processes are presented in the literature to obtain a good dispersion of CNTs in polymers, and polyolefins in particular, such as in-situ polymerization.

In-situ polymerization: in this approach, the CNTs are used as catalyst support, replacing more classical supports like silica or alumina phosphate. After impregnation or deposit of the catalyst on the CNT-support, the supported catalyst can then be introduced in a polymerization reactor. At the end of the polymerization, catalyst residues (containing the CNTs) can be well dispersed in the polymer matrix. A main drawback of this approach is the need to introduce the CNT-supported catalyst in an industrial polymerization reactor. Indeed, at the end of the CNT-polyolefin production, a complete cleaning of the reactor may be required. Such cleaning can be severe for safety reasons (due to the uncertainties on the CNT toxicity, there should be no contamination of the CNTs in the next polyolefin production) and for product quality reasons (any remaining traces of CNT in the reactor could induce a significant color change of the polymer prepared in the next run).

There remains a need to provide nanocomposites with improved dispersion of the nanoparticles, such as carbon nanotubes. There also remains a need to provide processes to obtain nanocomposites with improved dispersion of the nanoparticles, such as carbon nanotubes.

### Summary of the invention

It is therefore an object of the present invention to provide a nanocomposite with an improved and/or more stable dispersion of carbon nanotubes. It is also an object of the present invention to provide a process for preparing a nanocomposite with an improved and/or more stable dispersion of carbon nanotubes.

The inventors have now discovered that these objects can be met either individually or in any combination by the present nanocomposite and the process for their production. The inventors have surprisingly found that by functionalizing the carbon nanotubes, good nanotube dispersion can be easily achieved using standard extrusion processes.

According to a first aspect, the invention provides a nanocomposite, comprising:

- a polymer composition comprising at least one polymer; and
- at least 0.001 % by weight of carbon nanotubes, relative to the total weight of the nanocomposite;

wherein the carbon nanotubes are functionalized with a silane and the Si/C ratio of the carbon nanotubes is at most 0.01, or wherein the carbon nanotubes are functionalized with a modified polyolefin substituted by one or more substituents each independently selected from the group comprising $C_{2-6}$alkenyl, oxiranyl or hydroxyl;
wherein the silane has the general formula (I):

(I) $R^1\text{-}Si(R^2)(R^3)(R^4)$

wherein

R1 is selected from the group comprising $C_{3-8}$alkyl, $C_{3-8}$alkenyl and $C_{3-8}$hydroxyalkyl, optionally substituted by vinyl, oxiranyl, hydroxyl, $NR^5R^6$, halogen, $C_{1-8}$alkyl, $C_{1-8}$alkenyl and $C_{1-8}$hydroxyalkyl; and
$R^2$, $R^3$ and $R^4$ are each independently selected from hydrogen, hydroxyl, $C_{1-8}$alkyl, $C_{1-8}$alkoxy or $C_{1-8}$alkenyloxy, at least one of $R^2$, $R^3$ or $R^4$ being hydrogen; and
$R^5$ and $R^6$ are each independently selected from hydrogen or $C_{1-8}$alkyl.

According to a second aspect, the invention provides formed articles comprising the nanocomposite according to the first aspect of the invention.
According to a third aspect, the invention provides a process for preparing the nanocomposite, comprising the steps of:

(a) providing a polymer composition;

(b) providing at least 0.001% by weight of carbon nanotubes, relative to the total weight of the nanocomposite, wherein the carbon nanotubes are functionalized with a silane and the Si/C ratio of the carbon nanotubes is at most 0.01, or
wherein the carbon nanotubes are functionalized with a modified polyolefin substituted by one or more substituents each independently selected from the group comprising $C_{2-6}$alkenyl, oxiranyl or hydroxyl; and

(c) blending the functionalized carbon nanotubes with the polymer composition to obtain the nanocomposite according to the first aspect of the invention.

The independent and dependent claims set out particular and preferred features of the invention. Features from the dependent claims may be combined with features of the independent or other dependent claims as appropriate.
In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

**Brief description of the figures**

Figure 1: represents a photograph showing a nanocomposite comprising 1% by weight of functionalized carbon nanotubes (nanotubes 1) and polyethylene (polymer composition 1).

Figure 2: represents a photograph showing a nanocomposite comprising 1% by weight of 30 non-functionalized carbon nanotubes (nanotubes 0) and polyethylene (polymer composition 1).

Figure 3: represents a photograph showing a nanocomposite comprising 1% by weight of functionalized carbon nanotubes (nanotubes 2) and polypropylene (polymer composition 2).

Figure 4: represents a photograph showing a nanocomposite comprising 1% by weight of non-functionalized carbon nanotubes (nanotubes 0) and polypropylene (polymer composition 2).

**Detailed description of the invention**

Before the present nanocomposites of the invention are described, it is to be understood that this invention is not limited to particular nanocomposites described, since such nanocomposites may, of course, vary. It is also to be understood that the terminology used herein is not intended to be limiting, since the scope of the present invention will be limited only by the appended claims.
As used herein, the singular forms "a", "an", and "the" include both singular and plural referents unless the context clearly dictates otherwise. By way of example, "a nanotube" means one nanotube or more than one nanotube.
The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".
The recitation of numerical ranges by endpoints includes all integer numbers and, where appropriate, fractions

subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

All references cited in the present specification are hereby incorporated by reference in their entirety. In particular, the teachings of all references herein specifically referred to are incorporated by reference.

According to a first aspect, the invention provides a nanocomposite, comprising at least 0.001% by weight of carbon nanotubes, relative to the total weight of the nanocomposite, and a polymer composition comprising at least one polymer; and wherein the carbon nanotubes are functionalized with a silane or with a modified polyolefin. In a preferred embodiment, the carbon nanotubes are functionalized with a silane and the Si/C ratio of the carbon nanotubes is at most 0.01, or the carbon nanotubes are functionalized with a modified polyolefin. In an embodiment, the carbon nanotubes are functionalized with a silane and the Si/C ratio of the carbon nanotubes is at most 0.01. In an embodiment, the carbon nanotubes are functionalized with a modified polyolefin. In an embodiment, the carbon nanotubes are functionalized with a modified polyolefin and the Si/C ratio of the carbon nanotubes is at most 0.04. Preferably, the nanocomposite comprises at least 0.001% by weight of carbon nanotubes, relative to the total weight of the nanocomposite, and at least one composition comprising at least one polymer; and wherein the carbon nanotubes are functionalized with a silane or with a modified polyolefin. In some embodiments, the invention encompasses a nanocomposite consisting of (i) a polymer composition comprising at least one polymer; and (ii) at least 0.001% by weight of carbon nanotubes, relative to the total weight of the nanocomposite, wherein the carbon nanotubes are functionalized with a silane or with a modified polyolefin. In some embodiments, the invention encompasses a nanocomposite consisting of (i) a polymer composition comprising at least one polymer; and (ii) at least 0.001% by weight of carbon nanotubes, relative to the total weight of the nanocomposite, wherein the carbon nanotubes are functionalized with a silane and the Si/C ratio of the carbon nanotubes is at most 0.01, or wherein the carbon nanotubes are functionalized with a modified polyolefin. It is to be understood that in this embodiment the weight percentages of all components of the nanocomposite add up to 100%.

As used herein, the term "nanocomposite" is used to denote a blend of nanoparticles, which in the present invention are carbon nanotubes, and one or more polymers, preferably polyolefins. Suitable blends for the nanocomposite according to the invention may be physical blends or chemical blends.

The nanocomposite according to the invention comprises at least one polymer composition. The polymer composition according to the invention comprises one or more polymers.

In an embodiment of the invention, the nanocomposite comprises at least 50% by weight of polymer based on the total weight of the nanocomposite. In a preferred embodiment of the invention, the nanocomposite comprises at least 80% by weight of polymer based on the total weight of the nanocomposite. In a more preferred embodiment of the invention, the nanocomposite comprises at least 90% by weight of polymer based on the total weight of the nanocomposite.

In a preferred embodiment, the polymer has a multimodal molecular weight distribution, preferably a bimodal molecular weight distribution.

As used herein, the term "monomodal polymers" or "polymer with a monomodal molecular weight distribution" refers to polymers having one maximum in their molecular weight distribution curve, which is also defined as a unimodal distribution curve. As used herein, the term "polymers with a bimodal molecular weight distribution" or "bimodal polymers" it is meant, polymers having a distribution curve being the sum of two unimodal molecular weight distribution curves. By the term "polymers with a multimodal molecular weight distribution" or "multimodal polymers" it is meant polymers with a distribution curve being the sum of at least two, preferably more than two unimodal distribution curves.

In an embodiment, the bimodal weight distribution comprises a low mass fraction of from 10 to 90% by weight and a high mass fraction which is comprised in such a way that the sum is 100% by weight, with % by weight relative to the total weight of the polymer; preferably a low mass fraction of from 20 to 80% by weight, even more preferably from 30 to 70% by weight, most preferably from 40 to 60% by weight, and a high mass fraction which is comprised in such a way that the sum is 100% by weight, with % by weight relative to the total weight of the polymer. In an embodiment, the bimodal distribution has a unimodal molecular weight distribution having a weight average molecular weight of at most 50 kDa, preferably at most 25 kDa, and has a unimodal molecular weight distribution having a weight average molecular weight of at least 50 kDa, preferably at least 100kDa.

The bimodal or multimodal polymer composition may be a physical blend or a chemical blend of two or more monomodal polymers. Preferably, the polymer composition comprises a chemical blend of two or more monomodal polymers. Preferably, the polymer composition comprises a chemical blend of two monomodal polymers.

In a preferred embodiment, the polymer used in the polymer composition has a multimodal weight distribution; preferably the polymer used in the polymer composition has a bimodal weight distribution.

In an embodiment, the polymer composition comprises at least one polyolefin. The bimodal or multimodal polymer composition may be a physical blend or a chemical blend of two or more monomodal polyolefins. Preferably, the polymer composition comprises a chemical blend of two or more monomodal polyolefins. Preferably, the polymer composition comprises a chemical blend of two monomodal polyolefins.

In a preferred embodiment, the polyolefin used in the polymer composition has a multimodal weight distribution; preferably the polyolefin used in the polymer composition has a bimodal weight distribution.

The polymer composition may be viscous or fluid at a temperature of 190°C. The viscosity η of the polymer composition can be measured by Rheologic Dynamic Analysis at a frequency of 1 rad/s and a temperature of 190°C. It can be measured according to ASTM D4440 by using a rheologic dynamic analyzer (RDA) 700 from Rheometrics, a plate diameter of 25 mm and a gap between plates of 2 mm +/-0. 2 mm. The rheological measurements were performed at 190°C under nitrogen and at 10% of strain. Preferably, the viscosity is at least 10 000 Pa.s, preferably at least 20 000 Pa.s, preferably at least 40 000 Pa.s.

In a preferred embodiment, the High Load Melt Index (HLMI) of the polymer is at most 25 g/10 min, for example at most 20 g/10 min, for example at most 15 g/10 min, preferably at most 10 g/10 min, preferably at most 8 g/10 min, with the High Load Melt Index (HLMI) being measured by the procedure of ASTM D-1238 using a temperature of 190°C and a load of 21.6 kg.

In a preferred embodiment, the High Load Melt Index (HLMI) of the polyolefin is at most 25 g/10 min, for example at most 20 g/10 min, for example at most 15 g/10 min, preferably at most 10 g/10 min, preferably at most 8 g/10 min, with the High Load Melt Index (HLMI) being measured by the procedure of ASTM D-1238 using a temperature of 190°C and a load of 21.6 kg.

In a preferred embodiment, the High Load Melt Index (HLMI) of polyethylene is at most 25 g/10 min, for example at most 20g/10 min, for example at most 15g/10 min, preferably at most 10g/10 min, preferably at most 8g/10 min, with the High Load Melt Index (HLMI) being measured by the procedure of ISO 1133 condition G using a temperature of 190°C and a load of 21.6 kg.

In an embodiment, the polymer has a density of from 0.900 to 0.960 g/cm$^3$, preferably from 0.940 to 0.960 g/cm$^3$, as determined with the ISO 1183 standard. In an embodiment, the polyolefin has a density of from 0.900 to 0.960 g/cm$^3$, preferably from 0.940 to 0.960 g/cm$^3$, as determined with the ISO 1183 standard.

In a preferred embodiment of the invention, the polymer has a weight average molecular weight $M_w$ of at least 60 000 Da, preferably at least 100 000 Da, preferably at least 200 000 Da. Molecular weights can be determined by Size Exclusion Chromatography (SEC) as described herein below in the test methods.

In a preferred embodiment of the invention, the polymer has a polydispersity index of at least 8, preferably at least 10, preferably at least 15.

The polydispersity index is defined by the ration $M_w/M_n$ of the weight average molecular weight $M_w$ to the number average molecular weight $M_n$ as determined by Size Exclusion Chromatography (SEC) as described herein below in the test methods.

In a preferred embodiment of the invention, the polymer has a long chain branching index $g_{rheo}$ that is at least 0.65, preferably at least 0.80, preferably at least 0.90. As used herein the long chain branching (LCB) index $g_{rheo}$ can be obtained by rheology according to the formula

$$g_{rheo} = 1.1/(3.73+6.08*10^{-7}(M_w)^{2.5}+0.144/(\ln(\rho)))$$

wherein $M_w$ is the weight average molecular weight of the polyolefin expressed in kDa and ρ is the density of the polyolefin expressed in g/cm$^3$.

The polymer compositions suitable for use in the present invention are not particularly limited. However, it is preferred that the polymer composition comprises at least 50% by weight, more preferably at least 70% by weight or 90% by weight, even more preferably at least 95% by weight or 97% by weight, still even more preferably at least 99% by weight or 99.5% by weight or 99.9% by weight, relative to its total weight, of a polymer selected from the group comprising polyamides, polyolefins, poly(hydroxy carboxylic acid), polystyrene, polyesters or blends of these. Most preferably, the polymer composition comprises a polymer selected from the group comprising polyolefins, polylactic acid, polystyrene, polyethylene terephthalate, polyurethane, and blends thereof.

The most preferred polymers are polyolefins, preferably polyethylene and polypropylene. In a preferred embodiment, the polymer composition comprises at least one polyolefin. As used herein, the terms "olefin polymer" and "polyolefin" are used interchangeably.

In an embodiment of the invention, the nanocomposite comprises at least 50% by weight of polyolefin based on the total weight of the nanocomposite. In a preferred embodiment of the invention, the nanocomposite comprises at least 80% by weight of polyolefin based on the total weight of the nanocomposite. In a more preferred embodiment of

the invention, the nanocomposite comprises at least 90% by weight of polyolefin based on the total weight of the nanocomposite.

The polyolefins used in the present invention may be any olefin homopolymer or any copolymer of an olefin and one or more comonomers. The polyolefins may be atactic, syndiotactic or isotactic. The olefin can for example be ethylene, propylene, 1-butene, 1-pentene, 1-hexene, 4-methyl-1-pentene or 1-octene, but also cycloolefins such as for example cyclopentene, cyclohexene, cyclooctene or norbornene. The comonomer is different from the olefin and chosen such that it is suited for copolymerization with the olefin. The comonomer may also be an olefin as defined above. Further examples of suitable comonomers are vinyl acetate ($H_3C-C(=O)O-CH=CH_2$) or vinyl alcohol ("$HO-CH=CH_2$", which as such is not stable and tends to polymerize). Examples of olefin copolymers suited for use in the present invention are random copolymers of propylene and ethylene, random copolymers of propylene and 1-butene, heterophasic copolymers of propylene and ethylene, ethylene-butene copolymers, ethylene-hexene copolymers, ethylene-octene copolymers, copolymers of ethylene and vinyl acetate (EVA), copolymers of ethylene and vinyl alcohol (EVOH).

Most preferred polyolefins for use in the present invention are olefin homopolymers and copolymers of an olefin and one or more comonomers, wherein said olefin and said one or more comonomer is different, and wherein said olefin is ethylene or propylene. The term "comonomer" refers to olefin comonomers which are suitable for being polymerized with olefin monomers, preferably ethylene or propylene monomers. Comonomers may comprise but are not limited to aliphatic $C_2$-$C_{20}$ alpha-olefins. Examples of suitable aliphatic $C_2$-$C_{20}$ alpha-olefins include ethylene, propylene, 1-butene, 4-methyl-1-pentene, 1-hexene, 1-octene, 1-decene, 1-dodecene, 1-tetradecene, 1-hexadecene, 1-octadecene and 1-eicosene. In an embodiment, the comonomer is vinyl acetate.

As used herein, the term "co-polymer" refers to a polymer, which is made by linking two different types of monomers in the same polymer chain. As used herein, the term "homopolymer" refers to a polymer which is made by linking (preferably olefin, preferably ethylene) monomers, in the absence of comonomers. The amount of comonomer can be from 0 to 12% by weight, based on the weight of the polyolefin, more preferably it can be from 0 to 9% by weight and most preferably it can be from 0 to 7% by weight. A copolymer can be a random or block (heterophasic) copolymer. Preferably, the copolymer is a random copolymer. Such olefin homopolymer and copolymers of an olefin and one or more comonomers are non-polar polymers. Preferred polyolefins for use in the present invention are propylene and ethylene polymers. Preferably, the polyolefin is selected from polyethylene and polypropylene homo- and copolymers. Preferably, the polyolefin is polyethylene or polypropylene, or a copolymer thereof.

In a preferred embodiment of the invention, the polymer composition comprises at least 50% by weight of polyolefin, relative to the total weight of the polymer composition. Preferably, the polymer composition comprises at least 60% by weight of polyolefin, preferably at least 70% by weight of polyolefin, preferably at least 80% by weight of polyolefin, preferably at least 90% by weight of polyolefin, preferably at least 95% by weight of polyolefin, preferably at least 99% by weight of polyolefin, relative to the total weight of the polymer composition. In a preferred embodiment of the invention, the polymer composition comprises at least 50% by weight of polyethylene, relative to the total weight of the polymer composition. Preferably, the polymer composition comprises at least 60% by weight of polyethylene, preferably at least 70% by weight of polyethylene, preferably at least 80% by weight of polyethylene, preferably at least 90% by weight of polyethylene, for example at least 95% by weight of polyethylene, for example at least 99% by weight of polyethylene, relative to the total weight of the polymer composition.

The polyolefin, such as polyethylene, can be prepared in the presence of any catalyst known in the art. As used herein, the term "catalyst" refers to a substance that causes a change in the rate of a polymerization reaction without itself being consumed in the reaction. In the present invention, it is especially applicable to catalysts suitable for the polymerization of ethylene to polyethylene. These catalysts will be referred to as ethylene polymerization catalysts or polymerization catalysts. In an embodiment of the invention, the polymer composition comprises a polyolefin prepared in the presence of a catalyst selected from a Ziegler-Natta catalyst, a metallocene catalyst or a chromium catalyst, In a preferred embodiment of the invention, the polymer composition comprises a polyolefin prepared in the presence of a catalyst selected from a Ziegler-Natta catalyst, a metallocene catalyst, or both; preferably prepared in the presence of a Ziegler-Natta catalyst.

The term "chromium catalysts" refers to catalysts obtained by deposition of chromium oxide on a support, e.g. a silica or aluminum support. Illustrative examples of chromium catalysts comprise but are not limited to $CrSiO_2$ or $CrAl_2O_3$.

The term "Ziegler-Natta catalyst" or "ZN catalyst" refers to catalysts having a general formula $M^1X_v$, wherein $M^1$ is a transition metal compound selected from group IV to VII from the periodic table of elements, wherein X is a halogen, and wherein v is the valence of the metal. Preferably, $M^1$ is a group IV, group V or group VI metal, more preferably titanium, chromium or vanadium and most preferably titanium. Preferably, X is chlorine or bromine, and most preferably, chlorine. Illustrative examples of the transition metal compounds comprise but are not limited to $TiCl_3$ and $TiCl_4$. Suitable ZN catalysts for use in the invention are described in US6930071 and US6864207, which are incorporated herein by reference.

In some embodiments, the polyolefin is a polyolefin produced in the presence of small Ziegler-Natta catalyst particles. The polyolefin can be produced in the presence of a Ziegler-Natta catalyst with an average particle size (D50)

of at most 15 μm, preferably at most 13 μm, preferably at most 10 μm, preferably at most 8 μm, for example at most 5 μm and preferably at least 3 μm. The D50 is defined as the particle size for which fifty percent by volume of the particles has a size lower than the D50. The D50 is measured by laser diffraction analysis on a Malvern type analyzer after having put the catalyst in suspension in cyclohexane. Suitable Malvern systems include the Malvern 2000, Malvern 2600 and Malvern 3600 series. The Malvern MasterSizer may also be useful as it can more accurately measure the D50 towards the lower end of the range e.g. for average particle sizes of less 8 μm, by applying the theory of Mie, using appropriate optical means.

In a preferred embodiment, the polyolefin used in the polymer composition is a multimodal polyolefin prepared in the presence of a Ziegler-Natta catalyst. For example, the polyolefin can be a bimodal polyethylene prepared in the presence of a Ziegler-Natta catalyst.

In a preferred embodiment, the polyolefin used in the polymer composition is a monomodal polyolefin prepared in the presence of a Ziegler-Natta catalyst. For example, the polyolefin can be a monomodal polyethylene or polypropylene prepared in the presence of a Ziegler-Natta catalyst.

The term "metallocene catalyst" is used herein to describe any transition metal complexes consisting of metal atoms bonded to one or more ligands. The metallocene catalysts are compounds of Group 4 transition metals of the Periodic Table such as titanium, zirconium, hafnium, etc., and have a coordinated structure with a metal compound and ligands composed of one or two groups of cyclo-pentadienyl, indenyl, fluorenyl or their derivatives. Use of metallocene catalysts in the polymerization of polyethylene has various advantages. The key to metallocenes is the structure of the complex. The structure and geometry of the metallocene can be varied to adapt to the specific need of the producer depending on the desired polymer. Metallocenes comprise a single metal site, which allows for more control of branching and molecular weight distribution of the polymer. Monomers are inserted between the metal and the growing chain of polymer.

In an embodiment, the metallocene catalyst has a general formula (I) or (II):

$$(Ar)_2MQ_2 \qquad (I);$$

or

$$R^{11}(Ar)_2MQ_2 \qquad (II)$$

wherein the metallocenes according to formula (I) are non-bridged metallocenes and the metallocenes according to formula (II) are bridged metallocenes;

wherein said metallocene according to formula (I) or (II) has two Ar bound to M which can be the same or different from each other;

wherein Ar is an aromatic ring, group or moiety and wherein each Ar is independently selected from the group consisting of cyclopentadienyl, indenyl, tetrahydroindenyl or fluorenyl, wherein each of said groups may be optionally substituted with one or more substituents each independently selected from the group consisting of halogen, a hydrosilyl, a $SiR^{12}_3$ group wherein $R^{12}$ is a hydrocarbyl having 1 to 20 carbon atoms, and a hydrocarbyl having 1 to 20 carbon atoms, wherein said hydrocarbyl optionally contains one or more atoms selected from the group comprising B, Si, S, O, F, Cl and P;

wherein M is a transition metal selected from the group consisting of titanium, zirconium, hafnium and vanadium; and preferably is zirconium;

wherein each Q is independently selected from the group consisting of halogen; a hydrocarboxy having 1 to 20 carbon atoms; and a hydrocarbyl having 1 to 20 carbon atoms and wherein said hydrocarbyl optionally contains one or more atoms selected from the group comprising B, Si, S, O, F, Cl and P; and

wherein $R^{11}$ is a divalent group or moiety bridging the two Ar groups and selected from the group consisting of a $C_1$-$C_{20}$ alkylene, a germanium, a silicon, a siloxane, an alkylphosphine and an amine, and wherein said $R^{11}$ is optionally substituted with one or more substituents each independently selected from the group consisting of halogen, a hydrosilyl, a $SiR^{13}_3$ group wherein $R^{13}$ is a hydrocarbyl having 1 to 20 carbon atoms, and a hydrocarbyl having 1 to 20 carbon atoms, wherein said hydrocarbyl optionally contains one or more atoms selected from the group comprising B, Si, S, O, F, Cl and P.

The term "hydrocarbyl having 1 to 20 carbon atoms" as used herein is intended to refer to a moiety selected from the group comprising a linear or branched $C_1$-$C_{20}$ alkyl; $C_3$-$C_{20}$ cycloalkyl; $C_6$-$C_{20}$ aryl; $C_7$-$C_{20}$ alkylaryl and $C_7$-$C_{20}$ arylalkyl, or any combinations thereof. Exemplary hydrocarbyl groups are methyl, ethyl, propyl, butyl, amyl, isoamyl, hexyl, isobutyl, heptyl, octyl, nonyl, decyl, cetyl, 2-ethylhexyl, and phenyl. Exemplary halogen atoms include chlorine, bromine, fluorine and iodine and of these halogen atoms, fluorine and chlorine are preferred.

As used herein, the term "alkyl" by itself or as part of another substituent, refers to a straight or branched saturated hydrocarbon radical group joined by single carbon-carbon bonds having 1 or more carbon atoms, for example 1 to 20 carbon atoms, for example 1 to 12 carbon atoms, for example 1 to 6 carbon atoms, for example 1 to 4 carbon

atoms, for example 2 to 3 carbon atoms. When a subscript is used herein following a carbon atom, the subscript refers to the number of carbon atoms that the named group may contain. Thus, for example, $C_{1-12}$alkyl means an alkyl of 1 to 12 carbon atoms. Examples of $C_{1-12}$alkyl groups are methyl, ethyl, propyl, isopropyl, butyl, isobutyl, sec-butyl, tert-butyl, pentyl and its chain isomers, hexyl and its chain isomers, heptyl and its chain isomers, octyl and its chain isomers, nonyl and its chain isomers, decyl and its chain isomers, undecyl and its chain isomers, dodecyl and its chain isomers.

As used herein, the term "$C_{3-20}$cycloalkyl", by itself or as part of another substituent, refers to a saturated or partially saturated cyclic alkyl radical containing from 3 to 20 carbon atoms. Examples of $C_{3-20}$cycloalkyl include cyclopropyl, cyclobutyl, cyclopentyl, cyclohexyl, cycloheptyl and cyclooctyl.

As used herein, the term "$C_{6-20}$aryl", by itself or as part of another substituent, refers to a polyunsaturated, aromatic hydrocarbyl group having a single ring (i.e. phenyl) or multiple aromatic rings fused together (e.g. naphthalene), or linked covalently, typically containing 6 to 20 carbon atoms; wherein at least one ring is aromatic. Examples of $C_{6-20}$aryl include phenyl, naphthyl, indanyl, biphenyl, or 1,2,3,4-tetrahydro-naphthyl.

The term "arylalkyl", as a group or part of a group, refers to an alkyl as defined herein, wherein one or more hydrogen atoms are replaced by an aryl as defined herein. Examples of arylalkyl radicals include benzyl, phenethyl, dibenzylmethyl, methylphenylmethyl, 3-(2-naphthyl)-butyl, and the like.

As used herein, the term "alkylaryl", by itself or as part of another substituent, refers to an aryl group as defined herein, wherein one or more hydrogen atoms are replaced by an alkyl as defined herein.

The term "hydrocarboxy having 1 to 20 carbon atoms" refers to a radical having the formula $-O-R_a$ wherein $R_a$ is hydrocarbyl having 1 to 20 carbon atoms. Preferred hydrocarboxy groups are alkoxy groups. The term "alkoxy" or "alkyloxy" as used herein refers to a radical having the formula $-O-R_b$ wherein $R_b$ is alkyl. Non-limiting examples of suitable alkoxy groups include methoxy, ethoxy, propoxy, isopropoxy, butoxy, isobutoxy, sec-butoxy, tert-butoxy, pentyloxy, amyloxy, hexyloxy, heptyloxy and octyloxy. Preferred hydrocarboxy groups are methoxy, ethoxy, propoxy, butoxy, and amyloxy.

Illustrative examples of metallocene catalysts comprise but are not limited to bis(cyclopentadienyl) zirconium dichloride ($Cp_2ZrCl_2$), bis(cyclopentadienyl) titanium dichloride ($Cp_2TiCl_2$), bis(cyclopentadienyl) hafnium dichloride ($Cp_2HfCl_2$); bis(tetrahydroindenyl) zirconium dichloride, bis(indenyl) zirconium dichloride, and bis(n-butyl-cyclopentadienyl) zirconium dichloride, ethylenebis(4,5,6,7-tetrahydro-1-indenyl) zirconium dichloride, ethylenebis(1-indenyl) zirconium dichloride, dimethylsilylene bis(2-methyl-4-phenyl-inden-1-yl) zirconium dichloride, diphenylmethylene (cyclopentadienyl)(fluoren-9-yl) zirconium dichloride, and dimethylmethylene [1-(4-tert-butyl-2-methyl-cyclopentadienyl)](fluoren-9-yl) zirconium dichloride.

The metallocene catalysts can be provided on a solid support. The support can be an inert solid, organic or inorganic, which is chemically unreactive with any of the components of the conventional metallocene catalyst. Suitable support materials for the supported catalyst of the present invention include solid inorganic oxides, such as silica, alumina, magnesium oxide, titanium oxide, thorium oxide, as well as mixed oxides of silica and one or more Group 2 or 13 metal oxides, such as silica-magnesia and silica-alumina mixed oxides. Silica, alumina, and mixed oxides of silica and one or more Group 2 or 13 metal oxides are preferred support materials. Preferred examples of such mixed oxides are the silica-aluminas. Most preferred is silica. The silica may be in granular, agglomerated, fumed or other form. The support is preferably a silica compound. In a preferred embodiment, the metallocene catalyst is provided on a solid support, preferably a silica support. In an embodiment, the catalyst used for preparing the polyolefin is a supported metallocene-alumoxane catalyst comprising a metallocene and an alumoxane which are bound on a porous silica support.

In some embodiments, the polyolefin used in the polymer composition is a multimodal polyolefin prepared in the presence of a metallocene catalyst. For example, the polyolefin can be a bimodal polyethylene prepared in the presence of a metallocene catalyst.

In a preferred embodiment, the polyolefin used in the polymer composition is a monomodal polyolefin prepared in the presence of a metallocene catalyst. For example, the polyolefin can be a monomodal polyethylene or polypropylene prepared in the presence of a metallocene catalyst.

In an embodiment, the polymer composition comprises at least one polyamide. Polyamides are characterized in that the polymer chain comprises amide groups (-NH-C(=O)-). Polyamides useful in the present invention are preferably characterized by one of the following two chemical structures

$$[-NH-(CH_2)_n-C(=O)-]_x$$

$$[-NH-(CH_2)_m-NH-C(=O)-(CH_2)_n-C(=O)-]_x$$

wherein m and n may be independently chosen from one another and be an integer from 1 to 20.

Specific examples of suitable polyamides are polyamides 4, 6, 7, 8, 9, 10, 11, 12, 46, 66, 610, 612 and 613.

In an embodiment, the polymer composition comprises at least one polystyrene. The polystyrenes used in the present invention may be any styrene homopolymer or copolymer. They may be atactic, syndiotactic or isotactic. Styrene

copolymers comprise one or more suitable comonomers, i.e. polymerizable compounds different from styrene. Examples of suitable comonomers are butadiene, acrylonitrile, acrylic acid or methacrylic acid. Examples of styrene copolymers that may be used in the present invention are butadiene-styrene copolymers, which are also referred to as high-impact polystyrene (HIPS), acrylonitrile-butadiene-styrene copolymers (ABS) or styrene-acrylonitrile copolymers (SAN).

In an embodiment, the polymer composition comprises at least one polyester. Polyesters that may be used in the present invention are preferably characterized by the following chemical structure

$$[-C(=O)-C_6H_4-C(=O)O-(CH_2-CH_2)_n-O-]_x$$

wherein n is an integer from 1 to 10, with preferred values being 1 or 2.

Specific examples of suitable polyesters are polyethylene terephthalate (PET) and polybutylene terephthalate (PBT).

Furthermore, preferred polyesters are poly(hydroxy carboxylic acid)s. From a standpoint of availability and transparency, the poly(hydroxy carboxylic acid) is preferably a polylactic acid (PLA). Preferably the polylactic acid is a homopolymer obtained either directly from lactic acid or from lactide, preferably from lactide.

The nanocomposite according to the invention comprises at least 0.001% by weight of carbon nanotubes, relative to the total weight of the nanocomposite.

For example, the nanocomposite of the present invention can comprise at least 0.005% by weight, more preferably at least 0.01% by weight and most preferably at least 0.05% by weight, relative to the total weight of the nanocomposite, of carbon nanotubes.

In some embodiments of the invention, the nanocomposite comprises from 0.001% to 25% by weight of carbon nanotubes, preferably from 0.002% to 20% by weight, preferably from 0.005% to 10% by weight, preferably from 0.01% to 5% by weight, relative to the total weight of the nanocomposite.

Preferably, the nanocomposite of the present invention comprises at most 20% by weight, more preferably at most 15% by weight, even more preferably at most 10% by weight, and most preferably at most 5% by weight, relative to the total weight of the nanocomposite, of carbon nanotubes.

The carbon nanotubes used in the present invention can generally be characterized by having a size from 1 nm to 500 nm, this definition of size can be limited to two dimensions only, i.e. the third dimension may be outside of these limits.

Suitable nanotubes to be used in the invention can be cylindrical in shape and structurally related to fullerenes, an example of which is Buckminster fullerene ($C_{60}$). Suitable nanotubes may be open or capped at their ends. The end cap may for example be a Buckminster-type fullerene hemisphere. The nanotubes used in the present invention are made from carbon, i.e. they comprise more than 90%, more preferably more than 95%, even more preferably more than 99% and most preferably more than 99.9% of their total weight in carbon; such nanotubes are generally referred to as "carbon nanotubes" (CNT) (and may be simply referred to as "nanotubes" in the present application). However, minor amounts of other atoms may also be present.

Suitable carbon nanotubes to be used in the present invention can be prepared by any method known in the art. They can be prepared by the catalyst decomposition of hydrocarbons, a technique that is called Catalytic Carbon Vapor Deposition (CCVD). Other methods for preparing carbon nanotubes include the arc-discharge method, the plasma decomposition of hydrocarbons or the pyrolysis of selected polyolefin under selected oxidative conditions. The starting hydrocarbons can be acetylene, ethylene, butane, propane, ethane, methane or any other gaseous or volatile carbon-containing compound. The catalyst, if present, is used in either pure or in supported form. The presence of a support greatly improves the selectivity of the catalysts but it contaminates the carbon nanotubes with support particles, in addition to the soot and amorphous carbon prepared during pyrolysis. Purification can remove these by-products and impurities. This can be carried out according to the following two steps:

1) the dissolution of the support particles, typically carried out with an appropriate agent that depends upon the nature of the support and

2) the removal of the pyrolytic carbon component, typically based on either oxidation or reduction processes.

Nanotubes can exist as single-walled nanotubes (SWNT) and multi-walled nanotubes (MWNT), i.e. nanotubes having one single wall and nanotubes having more than one wall, respectively. In single-walled nanotubes a one atom thick sheet of atoms, for example a one atom thick sheet of graphite (also called graphene), is rolled seamlessly to form a cylinder. Multi-walled nanotubes consist of a number of such cylinders arranged concentrically. The arrangement in a multi-walled nanotube can be described by the so-called Russian doll model, wherein a larger doll opens to reveal a smaller doll.

In an embodiment, the nanotubes are multi-walled carbon nanotubes, more preferably multi-walled carbon

nanotubes having on average from 5 to 15 walls.

Nanotubes, irrespectively of whether they are single-walled or multi-walled, may be characterized by their outer diameter or by their length or by both.

Single-walled nanotubes are preferably characterized by an outer diameter of at least 0.5 nm, more preferably of at least 1 nm, and most preferably of at least 2 nm. Preferably their outer diameter is at most 50 nm, more preferably at most 30 nm and most preferably at most 10 nm. Preferably, the length of single-walled nanotubes is at least 0.1 μm, more preferably at least 1 μm, even more preferably at least 10 μm. Preferably, their length is at most 50 mm, more preferably at most 25 mm.

Multi-walled nanotubes are preferably characterized by an outer diameter of at least 1 nm, more preferably of at least 2 nm, 4 nm, 6 nm or 8 nm, and most preferably of at least 10 nm. The preferred outer diameter is at most 100 nm, more preferably at most 80 nm, 60 nm or 40 nm, and most preferably at most 20 nm. Most preferably, the outer diameter is in the range from 10 nm to 20 nm. The preferred length of the multi-walled nanotubes is at least 50 nm, more preferably at least 75 nm, and most preferably at least 100 nm. Their preferred length is at most 20 mm, more preferably at most 10 mm, 500 μm, 250 μm, 100 μm, 75 μm, 50 μm, 40 μm, 30 μm or 20 μm, and most preferably at most μ0 pm. The most preferred length is in the range from 100 nm to 10 μm. In an embodiment, the multi-walled carbon nanotubes have an average outer diameter in the range from 10 nm to 20 nm or an average length in the range from 100 nm to μ0 pm or both.

Non-limiting examples of commercially available multi-walled carbon nanotubes are Graphistrength™ 100, available from Arkema, and Nanocyl™ NC 7000, available from Nanocyl.

According to the invention, the carbon nanotubes are functionalized with a silane or with a modified polyolefin.

The silane or siloxane compound has the general formula (I):

(I) $R^1\text{-}Si(R^2)(R^3)(R^4)$

wherein

$R^1$ is selected from the group comprising $C_{3-8}$alkyl, $C_{3-8}$alkenyl and $C_3$-$_8$hydroxyalkyl, optionally substituted by oxiranyl, hydroxyl, $NR^5R^6$, halogen, $C_1$-$_8$alkyl, $C_1$-$_8$alkenyl and $C_1$-$_8$ hydroxyalkyl;

$R^2$, $R^3$ and $R^4$ are each independently selected from hydrogen, hydroxyl, $C_{1-8}$alkyl, $C_1$-8alkoxy or $C_1$-$_8$alkenyloxy; and

$R^5$ and $R^6$ are each independently selected from hydrogen or $C_{1-8}$alkyl.

In a preferred embodiment, at least one of $R^2$, $R^3$ and $R^4$ is hydrogen. In an embodiment, $R^2$ is hydrogen and $R^3$ and $R^4$ are not hydrogen. In an embodiment, $R^2$ is hydrogen and $R^3$ and $R^4$ are each independently selected from hydroxyl, $C_{1-8}$alkyl, $C_{1-8}$alkoxy or $C_{1-8}$ alkenyloxy. In an embodiment, $R^2$ is hydrogen and $R^3$ and $R^4$ are each independently selected from $C_1$-$_8$alkoxy. In an embodiment, $R^2$ is hydrogen and $R^3$ and $R^4$ are each independently selected from $C_{1-6}$alkoxy. In an embodiment, $R^2$ is hydrogen and $R^3$ and $R^4$ are each independently selected from $C_{1-4}$alkoxy, preferably methoxy or ethoxy, preferably methoxy.

In an embodiment $R^3$ and $R^4$ are each independently $C_{1-8}$alkoxy, preferably $R^3$ and $R^4$ are each independently $C_{1-6}$alkoxy. Preferably $R^3$ and $R^4$ are each independently $C_1$-$_4$alkoxy, preferably methoxy or ethoxy, preferably methoxy.

In an alternative embodiment $R^3$ and $R^4$ are each independently $C_1$-$_8$alkyl, preferably $R^3$ and $R^4$ are each independently $C_{1-6}$alkyl. Preferably $R^3$ and $R^4$ are each independently $C_{1-4}$alkyl, preferably methyl or ethyl, preferably methyl.

In a preferred embodiment, $R^1$ is $C_3$-$_8$alkenyl. For example, $R^1$ is $C_3$-$_6$alkenyl. In a preferred embodiment, $R^1$ is $C_{3-8}$alkenyl and $R^2$ is hydrogen. In a preferred embodiment, $R^1$ is $C_3$-$_8$ alkenyl, $R^2$ is hydrogen and $R^3$ and $R^4$ are $C_{1-8}$alkoxy. In a preferred embodiment, $R^1$ is $C_3$-$_6$alkenyl, $R^2$ is hydrogen and $R^3$ and $R^4$ are $C_{1-6}$alkoxy. In a preferred embodiment, $R^1$ is $C_3$-$_6$alkenyl, $R^2$ is hydrogen and $R^3$ and $R^4$ are C1-$_4$alkoxy, preferably methoxy or ethoxy, preferably methoxy.

A non-limiting example of a silane is dimethoxy monohydro allylsilane, wherein $R^1$ is $-CH_2-CH=CH_2$ (also known as 2-propenyl or ally!), $R^2$ is hydrogen, and $R^3$ and $R^4$ methoxy.

In a preferred embodiment, the Si/C ratio of the carbon nanotubes is at most 0.01, more preferably at most 0.007. The Si/C ratio can be measured by X-Ray Photoelectron Spectroscopy (XPS). This analytical technique probes the surface of the sample by sending an X-Ray beam onto the sample and by collecting the resulting photo-emitted electrons. Each emission corresponds to a specific atom surrounded by neighboring atoms, which means that -C-OH and -C=0 can be discriminated, for example. During the XPS analysis of functionalized carbon nanotubes, all contributions from carbon species are measured, and the contribution from Si is also measured. X-Ray Photoelectron Spectroscopic measurements can be carried out in an SSX-100

spectrometer using monochromatized Al K$\alpha$ radiation (1486.6 eV) and a 35° take-off angle (relative to the surface normal). The analyzed core-level lines can be internally calibrated with respect to the component C1 s of binding energy set at 284.6 eV (C1s coming from contamination of the atmosphere for non-carbon samples, and C1s coming from the sample itself if it contains carbon species - as it is the case here).

The modified polyolefin is a polyolefin substituted by one or more substituents each independently selected from the group comprising $C_{2-6}$alkenyl, oxiranyl or hydroxyl, preferably wherein the substituent is $C_{2-6}$alkenyl.

Preferred polyolefins provided on the carbon nanotubes are polyethylene, polypropylene and copolymers thereof.

For example, the modified polyolefin can be polyethylene or polypropylene, or a copolymer thereof, each being substituted with $C_{2-6}$alkenyl, preferably vinyl. Suitable modified polyolefin are commercial products from Baker Hughes. The reaction can occur through a Diels-Alder reaction, or a radical reaction, for example initiated by peroxides. Preferably, the modified polyolefin is polyethylene or polypropylene, or a copolymer thereof, substituted with $C_{2-6}$alkenyl, preferably vinyl.

In an embodiment, the modified polyolefin can be halogenated, such as hydrobromated prior to reacting with the carbon nanotube.

When the term "alkyl" is used as a suffix following another term, as in "hydroxyalkyl," this is intended to refer to an alkyl group, as defined above, being substituted with one or two (preferably one) substituent(s) selected from the other, specifically-named group, also as defined herein. The term "hydroxyalkyl" therefore refers to a $-R_a-OH$ group wherein $R_a$ is an alkylene as defined herein.

As used herein, the term "$C_{1-12}$alkylene", by itself or as part of another substituent, refers to $C_{1-12}$alkyl groups that are divalent, i.e., with two single bonds for attachment to two other groups. Alkylene groups may be linear or branched and may be substituted as indicated herein. Non-limiting examples of alkylene groups include methylene ($-CH_2-$), ethylene ($-CH_2-CH_2-$), methylmethylene ($-CH(CH_3)-$), 1-methyl-ethylene ($-CH(CH_3)-CH_2-$), n-propylene ($-CH_2-CH_2-CH_2-$), 2-methylpropylene ($-CH_2-CH(CH_3)-CH_2-$), 3-methylpropylene ($-CH_2-CH_2-CH(CH_3)-$), n-butylene ($-CH_2-CH_2-CH_2-CH_2-$), 2-methylbutylene ($-CH_2-CH(CH_3)-CH_2-CH_2-$), 4-methylbutylene ($-CH_2-CH_2-CH_2-CH(CH_3)-$), pentylene and its chain isomers, hexylene and its chain isomers, heptylene and its chain isomers, octylene and its chain isomers, nonylene and its chain isomers, decylene and its chain isomers, undecylene and its chain isomers, dodecylene and its chain isomers.

As used herein, the term "$C_{3-8}$alkenyl" by itself or as part of another substituent, refers to an unsaturated hydrocarbyl group, which may be linear, or branched, comprising one or more carbon-carbon double bonds. Preferred alkenyl groups thus comprise from 3 to 8 carbon atoms. Non-limiting examples of $C_{3-8}$alkenyl groups include 2-propenyl, 2-butenyl, 3-butenyl, 2-pentenyl and its chain isomers, 2-hexenyl and its chain isomers, 2-heptenyl and its chain isomers, 2-octenyl and its chain isomers, 2,4-pentadienyl and the like.

The term "$C_{1-8}$alkenyloxy" as used herein refers to a radical having the formula $-O-R_c$ wherein $R_c$ is $C_{1-8}$alkenyl.

As used herein, the term "oxiranyl" refers to the cyclic ether group with the formula ($-C_2H_3O$), which may also be referred to as the radical of ethylene oxide.

As used herein, the term "vinyl" refers to the $C_2$alkenyl group with the formula ($-HC=CH_2$), which may also be referred to as ethenyl.

According to an embodiment, the carbon nanotube can be physically or chemically activated before functionalization with the silane or siloxane compound or modified polyolefin.

The activation can result from the surface oxidation/hydroxylation by any available technique (physical or chemical). The activation can be performed using wet-chemistry technique using a solution of an oxidant in acidic or basic media, such as sulphuric acid/nitric acid, hydrogen peroxide/sulphuric acid, $H_2O_2$/TFA, $H_2O_2$/HF, $K_2Cr_2O_7/H_2SO_4$, oxone/$H_2SO_4$, $H_2O_2/NH_4OH$, or in organic media, such as an organic peracid, $Br_2$ in solution. The activation may also be carried out by dipping the nanotubes in solution of an oxidant in acidic or basic media. Suitable solutions of an oxidant in acidic or basic media, are e.g. sulphuric acid/nitric acid, $H_2O_2/H_2SO_4$, $H_2O_2$/TFA, $H_2O_2$/HF, $K_2Cr_2O_7/H_2SO_4$, oxone/$H_2SO_4$, $H_2O_2/NH_4OH$, or e.g. in organic media, such as an organic peracid, $Br_2$ in a suitable solution. The oxidation can also be performed in acid aqueous solution. In a preferred embodiment, the oxidation can be performed in an oven under air or $O_2$ atmosphere. These embodiments are particularly preferred when the nanotube is to be functionalized with a silane or siloxane compound.

The activation can be performed at temperature which can be comprised from -15°C to +150°C, for example from 20 to 70°C. The duration of the treatment can be comprised from a few seconds to several hours.

In some embodiments, the inventors have surprisingly found that a low functionalization level (Si/C < 0.007) is enough to produce carbon nanotubes easy to disperse in polyolefins using standard extrusion processes. Therefore, the carbon nanotubes do not have to be highly oxidized prior to functionalization. In the present case, a "soft" oxidation step can be used: heating in oven under dry air atmosphere (for example with a flow = 200ml/min) at a suitable temperature for example of at most 500°C. This step allows the oxidation of the carbon nanotubes surface without destroying them. In a preferred embodiment, this oxidation is performed at a temperature of at most 500°C, preferably at most 400°C,

preferably at most 300°C, preferably at most 200°C, preferably at most 150°C.

In some embodiments, the carbon nanotube is physically or chemically activated by reacting with an acid halide, optionally in the presence of a Lewis acid, for example a strong lewis acid before functionalization with the silane or siloxane compound or with the modified polyolefin. This embodiment is particularly preferred when the nanotube is to be functionalized with a modified polyolefin.

In a preferred embodiment, the acid halide is phenylacetyl chloride, anacid chloride, perfluorobutyric acyl chloride, preferably phenylacetyl chloride. In a preferred embodiment, the Lewis acid is aluminum chloride.

The carbon nanotubes can form aggregates in the nanocomposite. Preferably, the size of each aggregate in the nanocomposite is at most 100μm, preferably at most 75μm, preferably at most 50μm. In an embodiment, the size of each nanoparticle aggregate in the nanocomposite is at most 40μm, preferably at most 30μm, preferably at most 20μm, preferably at most 10μm.

The size of nanotube aggregates can be measured by transmission electron microscopy (TEM) or by optical microscopy, which allows visualization of isolated nanotubes. Preferably, the composite material is cut in microtome sections, typically with a section width of from 0.05 to 100μm, preferably from 50 to 100μm, and investigated with a microtome. This allows evaluating the larger aggregates of CNT and gives an indication of their size.

In a preferred embodiment, the degree of dispersion of the nanotubes in the polyolefin composition can be assessed by a method based on ISO 18553:2002. As part of said method based on ISO 18553:2002, the size of nanoparticle aggregates dispersed in the polyolefin composition can be determined.

The degree of dispersion of the nanotubes in the polymer composition can be assessed using the molar absorptivity of the nanocomposite.

As used herein, the terms "molar absorption coefficient", "molar extinction coefficient", "molar absorptivity" and "absorptivity" are used interchangeably and refer to the measurement of how strongly a chemical species absorbs light at a given wavelength. Different disciplines have different conventions as to whether absorbance is Napierian or decadic, i.e., defined with respect to the transmission via natural or common logarithm. As used herein, the molar absorptivity is decadic.

The qualitative identification of a nanocomposite can be achieved by comparing the absorption spectrum of the nanocomposite with the spectra of known substances. A known substance can be determined by measuring the absorbance at one or more wavelengths and using the Beer-Lambert law and the molar absorptivity to calculate its amount concentration. Concentrations can also be determined from an analytical function or an analytical calibration curve.

According to an embodiment of the invention, the absorptivity $\varepsilon$ of the nanocomposite at a wavelength $\lambda$ of 800 nm is at least 250 per cm thickness of the sample and per % by weight of nanotubes, wherein % by weight is calculated relative to the total weight of the nanocomposite, wherein the absorptivity is calculated using the Lambert-Beer equation $A = lC\varepsilon$, wherein A is the absorbance, l is the thickness of the sample in cm and C is the concentration of nanotubes in % by weight, relative to the total weight of the nanocomposite.

According to an embodiment of the invention, the difference in molar absorptivity $\Delta\varepsilon$ of the nanocomposite at a wavelength $\lambda$ of 800 nm compared to the nanocomposite without nanoparticles is at least 75 per cm thickness of the sample and per % by weight of nanoparticles, wherein % by weight is calculated relative to the total weight of the nanocomposite, wherein the absorptivity is calculated using the Lambert-Beer equation $A = lC\varepsilon$, wherein A is the absorbance, l is the thickness of the sample in cm and C is the concentration of nanoparticles in % by weight, relative to the total weight of the nanocomposite.

The method to measure the absorptivity of a nanocomposite can be performed as described herein below. A slice of the nanocomposite is cut up in a thin section preferably with a thickness from 40μm to 100μm. The thin section is melted between two microscopic slides and then pressed under compression. The temperature is above the melting point of the nanocomposite, preferably between 200 and 250°C, preferably 220°C. The sample can be compressed manually. The thickness of the slice is measured. The slice is then put inside a spectrophotometer and a light beam with wavelength of 800nm is sent on the sample. The absorbance is recorded and the (molar) absorptivity is calculated following the Lambert-Beer equation.

In an embodiment of the invention, the nanocomposite comprises one or more additives selected from the group comprising an antioxidant, an antiacid, a UV-absorber, an antistatic agent, a light stabilizing agent, an acid scavenger, a lubricant, a nucleating/clarifying agent, a colorant or a peroxide. An overview of suitable additives may be found in Plastics Additives Handbook, ed. H. Zweifel, 5th edition, 2001, Hanser Publishers, which is hereby incorporated by reference in its entirety.

The invention also encompasses the nanocomposite as described herein wherein the nanocomposite comprises from 0% to 10% by weight of at least one additive, based on the total weight of the nanocomposite. In a preferred embodiment, said nanocomposite comprises less than 5% by weight of additive, based on the total weight of the nanocomposite, for example from 0.1 to 3% by weight of additive, based on the total weight of the nanocomposite.

In a preferred embodiment, the nanocomposite comprises an antioxidant. Suitable antioxidants include, for

example, phenolic antioxidants such as pentaerythritol tetrakis[3-(3',5'-di-tert-butyl-4'-hydroxyphenyl)propionate] (herein referred to as Irganox 1010), tris(2,4-ditert-butylphenyl) phosphite (herein referred to as Irgafos 168), 3DL-alpha-tocopherol, 2,6-di-tert-butyl-4-methylphenol, dibutylhydroxyphenylpropionic acid stearyl ester, 3,5-di-tert-butyl-4-hydroxyhydrocinnamic acid, 2,2'-methylenebis(6-tert-butyl-4-methyl-phenol), hexamethylene bis[3-(3,5-di-tert-butyl-4-hydroxyphenyl)propionate], benzenepropanamide,N,N'-1,6-hexanediyl bis[3,5-bis(1,1-dimethylethyl)-4-hydroxy] (Antioxidant 1098), Diethyl 3.5-Di-Tert-Butyl-4-Hydroxybenzyl Phosphonate, Calcium bis[monoethyl(3,5-di-tert-butyl-4-hydroxylbenzyl)phosphonate], Triethylene glycol bis(3-tert-butyl-4-hydroxy-5-methylphenyl)propionate (Antioxidant 245), 6,6'-di-tert-butyl-4,4'-butylidenedi-m-cresol, 3,9-bis(2-(3-(3-tert-butyl-4-hydroxy-5-methylphenyl)propionyloxy-1,1-dimethylethyl)-2,4,8,10-tetraoxaspiro[5.5]undecane, 1,3,5-trimethyl-2,4,6-tris(3,5-di-tert-butyl-4-hydroxybenzyl)benzene, 1,1,3-tris(2-methyl-4-hydroxy-5-tert-butylphenyl)butane, (2,4,6-trioxo-1,3,5-triazine-1,3,5(2H,4H,6H)-triyl)triethylene tris[3-(3,5-di-tert-butyl-4-hydroxyphenyl)propionate], tris(3,5-di-tert-butyl-4-hydroxybenzyl) isocyanurate, Tris(4-tert-butyl-3-hydroxy-2,6-dimethylbenzyl) isocyanurate, ethylene bis[3,3-bis(3-tert-butyl-4-hydroxyphenyl)butyrate], and 2,6-bis[[3-(1,1-dimethylethyl)-2-hydroxy-5-methylphenyl] octahydro-4,7-methano-1H-indenyl]-4-methyl-phenol. Suitable antioxidants also include, for example, phenolic antioxidants with dual functionality such 4,4'-Thio-bis(6-tert-butyl-m-methyl phenol) (Antioxidant 300), 2,2'-Sulfanediylbis(6-tert-butyl-4-methylphenol) (Antioxidant 2246-S), 2-Methyl-4,6-bis(octylsulfanylmethyl)phenol, thiodiethylene bis[3-(3,5-di-tert-butyl-4-hydroxyphenyl)propionate], 2,6-di-tert-butyl-4-(4,6-bis(octylthio)-1,3,5-triazin-2-ylamino)phenol, N-(4-hydroxyphenyl)stearamide, bis(1,2,2,6,6-pentamethyl-4-piperidyl) [[3,5-bis(1,1-dimethylethyl)-4-hydroxyphenyl]methyl]butylmalonate, 2,4-di-tert-butylphenyl 3,5-di-tert-butyl-4-hydroxybenzoate, hexadecyl 3,5-di-tert-butyl-4-hydroxy-benzoate, 2-(1,1-dimethylethyl)-6-[[3-(1,1-dimethylethyl)-2-hydroxy-5-methylphenyl] methyl]-4-methylphenyl acrylate, and Cas nr. 128961-68-2 (Sumilizer GS). Suitable antioxidants also include, for example, aminic antioxidants such as N-phenyl-2-naphthylamine, poly(1,2-dihydro-2,2,4-trimethyl-quinoline), N-isopropyl-N'-phenyl-p-phenylenediamine, N-Phenyl-1-naphthylamine, CAS nr. 68411-46-1 (Antioxidant 5057), and 4,4-bis(alpha,alpha-dimethylbenzyl)diphenylamine (Antioxidant KY 405). In a preferred embodiment, the antioxidant is selected from pentaerythritol tetrakis[3-(3',5'-di-tert-butyl-4'-hydroxyphenyl)propionate] (herein referred to as Irganox 1010), tris(2,4-ditert-butylphenyl) phosphite (herein referred to as Irgafos 168), or a mixture thereof.

According to a second aspect, the invention provides formed articles comprising the nanocomposite according to the first aspect of the invention. Due to the improved mechanical properties of the polymer in the nanocomposite it is suitable for a wide variety of applications. Preferred articles are fibers, films, sheets, containers, pipes, foams, rotomolded articles and injection molded articles. Most preferred articles are fibers.

The improved mechanical properties make the nanocomposite suitable for fiber applications. The nanocomposite can also be transformed into a film with improved printability, better surface tension, increased thermal and high frequency sealability, improved stiffness and enhanced breathability. The film also has good barrier properties against atmospheric gases, in particular oxygen and nitrogen. The nanocomposite can also be used to manufacture pouches, for example, for medical applications. The nanocomposite is also suitable for typical injection, extrusion and stretch blow molding applications, but also thermoforming, foaming and rotomolding. The articles made according to these processes can be mono- or multilayer, at least one of the layers comprising the nanocomposite of the invention.

According to a third aspect, the invention provides a process for preparing the nanocomposite according to the first aspect of the invention, comprising the steps of:

(a) providing a polymer composition;

(b) providing at least 0.001% by weight of carbon nanotubes, relative to the total weight of the nanocomposite, wherein the carbon nanotubes are functionalized with a silane and the Si/C ratio of the carbon nanotubes is at most 0.01, or wherein the carbon nanotubes are functionalized with a modified polyolefin substituted by one or more substituents each independently selected from the group comprising $C_{2-6}$alkenyl, oxiranyl or hydroxyl ; and

(c) blending the functionalized carbon nanotubes with the polymer composition to obtain the nanocomposite according to the first aspect of the invention.

The nanotubes and polymer composition can be as defined above.

According to an embodiment, the invention provides a process for preparing a nanocomposite comprising a polymer composition and at least 0.001% by weight of carbon nanotubes, relative to the total weight of the nanocomposite, wherein the carbon nanotubes are functionalized with a silane or siloxane compound, comprising the step of blending carbon nanotubes with the polymer composition.

The process of the present invention is particularly advantageous as it is simple and does not require additional compounds, such as for example compatibilizers. Hence, the process for preparing the nanocomposite of the present invention is preferably characterized by the absence of a compatibilizer. In other words, the preferred process for preparing the nanocomposite of the present invention is characterized by making no use of compatibilizers to homogeneously distribute the nanotubes in the polymer composition.

Contrary to all expectations it has been found that the use of compatibilizers is not necessary to achieve a homogeneous dispersion of nanotubes in a polymer composition as defined above. Surprisingly, the present process for preparing a nanocomposite of the present invention has given very good results for non-polar polymers such as polyolefins.

In a preferred embodiment of the invention, the polymer composition for use in the process described above is in the form of a fluff, powder, or pellet, preferably in the form of a fluff. In a preferred embodiment of the invention, the polyolefin composition for use in the process described above is in the form of a fluff, powder, flake or pellet, preferably in the form of a fluff.

As used herein, the term "fluff" refers to the polymer material that is prepared in a loop reactor with the hard catalyst particle at the core of each grain of the powder. As used herein the term "resin" encompasses both the fluff prepared in the loop reactor as well as the subsequently melted and/or pelleted polymer.

As used herein, the terms "polymer product" or "polymer pellet" are defined as polymer material that is prepared through compounding and homogenizing of the resin, for instance with mixing and/or extruder equipment. Preferably, the polymer particles have an average diameter (D50) of at most 2mm, more preferably at most 1mm, more preferably at most 100$\mu$m. The D50 is defined as the particle size for which fifty percent by volume of the particles has a size lower than the D50. The average size of the particles is preferably assessed by particle sieving. Alternatively, the size may be measured by using optical measurements, preferably with a Camsizer. As used herein, the term "polyolefin powder" refers to ground polyolefin fluff or ground polyolefin pellets.

Preferably, the nanocomposites are processed at a temperature above the melt temperature, i.e. they are melt-processed. In a preferred embodiment of the invention, the process of the present invention further comprises the step of:

(d) processing the nanocomposite obtained in step (c) at a temperature above the melt temperature of said nanocomposite;

wherein step (d) preferably comprises extruding a mixture of the polymer composition and the carbon nanotubes in an extruder.

The melt temperature of the nanocomposite can for example be determined by differential scanning calorimetry (DSC). The DSC can be performed with a Perkin-Elmer Pyris 1 equipment. In a typical DSC experiment, the sample is first heated up to 200°C at a 20°C/min rate in order to fully melt the nanocomposite and remove its thermomechanical history. The sample is held at 200°C during 3min. Then the sample is cooled down to - 40°C at a 20°C/min rate and heated up again at 200°C at 20°C/min. The melt temperature is measured during the second heating step and corresponds to the maximum of the melting peak. The standard used to calibrate the heating and cooling rate is Indium. It is noted that generally the melt temperature of the nanocomposite will be substantially the same as that of the polymer composition.

Said melt-processing step (d) can for example be a pelletization, i.e. the production of pellets by melt-extruding the nanocomposite, or step (d) can be a process selected from the group comprising fiber extrusion, film extrusion, sheet extrusion, pipe extrusion, blow molding, rotomolding, slush molding, injection molding, injection-stretch blow molding and extrusion-thermoforming. Most preferably, step (d) is a process selected from the group comprising pelletization, fiber extrusion, film extrusion, sheet extrusion and rotomolding.

The present invention preferably relates to extrusion. As used herein, the terms "extrusion" or "extrusion process", "pelletization" or "pelletizing" are used herein as synonyms and refer to the process of transforming polymer resin into a "polymer product" or into "pellets" after pelletizing. The process preferably comprises several equipments connected in series, including one or more rotating screws in an extruder, a die, and means for cutting the extruded filaments into pellets.

Preferably, polymer resin is fed to the extruding apparatus through a valve, preferably a feeding screw or a rotary valve, and conveyed -while passing a flow meter- to the at least one feeding zone of the extrusion apparatus. Preferably, nitrogen is provided in the feeding zone to prevent air from entering the extrusion apparatus, to thereby limit polymer degradation.

After being fed into the extruder, the polymer resin is preferably transported along with the rotating screw of the extruder. High shear forces are present in the extruder and product temperature increases. The polymer product, optionally in the presence of additives, melts and is homogenized and mixed.

The extruder can have one or more heating means e.g. a jacket to heat the extruder barrels or a hot oil unit. The screw in the extruder can be the vehicle upon which the polymer product travels. The shape of the screw can determine, along with the speed at which the screw turns, expressed in rpm, the speed at which the product moves and the pressure attained in the extruder. The screw in the screw mixer can be powered by a motor, preferably an electric motor.

In a preferred embodiment of the invention, the extruder has a screw speed from 10 to 2000 rpm, for example from 100 to 1000 rpm, for example from 150 to 300 rpm.

The melted and homogenized polymer product may further be pumped and pressurized by a pump at the end

of the extruder, preferably powered by an electrical motor. Preferably, the melted polymer product is further filtered by means of a filter to remove impurities and to reduce the amount of gels. Preferably, the product is then pushed through a die, preferably a die plate, provided in a pelletizer. In an embodiment, the polymer comes out of the die plate as a large number of noodles which are then delivered into pellet cooling water and cut underwater in the pelletizer by rotating knives. The particles can be cooled down with the water and form the pellets which are transported to further processing sections, e.g. to a packaging section.

Preferably, the nanocomposites are processed at a temperature below the decomposition temperature of the nanocomposite. As used herein, the decomposition temperature of the nanocomposite is equal to the decomposition temperature as the polymer composition. In a preferred embodiment of the invention, the temperature is from 150°C to 300°C, preferably from 200°C to 250°C.

The nanocomposites of the invention are characterized by an excellent dispersion of the functionalized carbon nanotubes in the nanocomposites. The present inventors have shown that the present nanocomposites did not comprise carbon nanotube aggregates above 100μm. The nanocomposites of the invention can be easily produced under flexible processing conditions, while leading to homogeneous dispersion of the carbon nanotubes. The method provides advantages such as easy mixing and ease of processing.

The advantages of the present invention are illustrated by the following examples.

**Examples**

**Test methods**

Determination of nanoparticles distribution can be performed by transmission electron microscopy (TEM): Nanocomposite samples were prepared under standard conditions. From these nanocomposite samples microtome slices having an average thickness of 130 nm were cut under cryogenic conditions. An area of ca. 1 mm by 1 mm was then checked optically for the presence of any agglomerated nanoparticles.

Distribution of nanoparticles in the nanocomposite was determined based on standard ISO 18553:2002. A slice of the nanocomposite was cut up after extrusion using a razor blade. The thin section was melted between two microscopic slides and then pressed under compression. The thickness of the slice was comprised between 40μm and 100μm, preferably 60μm. An area of 5 mm by 5 mm was then checked optically for the presence of any agglomerated nanoparticles. The microscope used was a Leica DMLP, with a Leica 5X objectif and a Leica DFC495 camera.

The density of the polyolefin compositions was measured by hydrostatic balance, according to ISO 1183.

For polyethylene, HLMI was determined using the procedure of ISO 1133 condition G with a temperature of 190°C and a load of 21.6 kg.

For polyethylene, MI2 was determined using the procedure of ISO 1133 condition D with a temperature of 190°C and a load of 2.16 kg.

For polypropylene, MI2 was determined using the procedure of ISO 1133 condition M with a temperature of 230°C and a load of 2.16 kg.

The viscosity $\eta$ of the polyolefin compositions was measured by Rheologic Dynamic Analysis at a frequency of 1 rad/s and a temperature of 190°C, according to ASTM D4440 by using a rheologic dynamic analyzer (RDA) 700 from Rheometrics, a plate diameter of 25 mm and a gap between plates of 2 mm +/-0. 2 mm. The rheological measurements were performed at 190°C under nitrogen and at 10% of strain.

Molecular weights (weight average and number average) are determined by Size Exclusion Chromatography (SEC) at high temperature (145°C). A 10 mg polypropylene or polyethylene sample is dissolved at 160°C in 10 ml of trichlorobenzene (technical grade) for 1 hour. Analytical conditions for the Alliance GPCV 2000 from WATERS are:

- Injection volume: +/- 400μl
- Automatic sample preparation and injector temperature: 160°C
- Column temperature: 145°C
- Detector temperature: 160°C
- Column set: 2 Shodex AT-806MS and 1 Styragel HT6E
- Flow rate: 1 ml/min
- Detector: Infrared detector (2800-3000 cm-1)

- Calibration: Narrow standards of polystyrene (commercially available)

The calculation for polypropylene was based on the Mark-Houwink relation ($\log_{10}(M_{PP}) = \log_{10}(M_{PS}) - 0.25323$); cut off on the low molecular weight end at $M_{PP}$ = 1000.

The calculation for polyethylene was based on the Mark-Houwink relation ($\log_{10}(M_{PE}) = 0.965909 - \log_{10}(M_{PS}) - 0.28264$) (or $K_{PE}M^{(\alpha_{PE}+1)} = K_{PS}M^{(\alpha_{PS}+1)}$, with $K_{PS}$ = 0.000167, $K_{PE}$ = 0.000525, $\alpha_{PS}$ = 0.7 and $\alpha_{PE}$ = 0.76); cut off on the low molecular weight end at $M_{PE}$ = 1000.

The molecular weight distribution (MWD) (polydispersity) is then calculated as $M_w/M_n$.

**Sample preparation**

Multi-walled carbon nanotubes Nanocyl NC 7000 were used as a basis (also referred to herein as "nanotubes 0") for the functionalized nanotubes, which have an apparent density of 50-150 kg/m$^3$, a mean agglomerate size of 200-500 μm, a carbon content of more than 90 % by weight, a mean number of 5-15 walls, an outer mean diameter of 10-15 nm and a length of 0.1-10 μm. All examples contain 1% by weight of carbon nanotubes, relative to the total weight of the nanocomposite.

Functionalized nanotubes 1 were modified using the following protocol:

In a round bottom flask, 1.1 gram of MWNT7000 (Nanocyl ®, used as received) was added to 66 ml of sulphuric acid (Chem-lab, 95-9 %) and 19 ml of nitric acid (Fluka, 65%).
The mixture was heated at 50°C during 2 hours under magnetic stirring. The obtained suspension was then filtered on a Buchner with fritted disc and washed with deionised water in order to obtain a neutral pH. The remaining water was removed by freeze-drying (Steris Lyovac GT 2-E). This resulted in weakly oxidized carbon nanotubes.

In a PFA round bottom flask, 4 g of weakly oxidized CNTs were added to 2.5 g of dimethoxyl monohydro allylsilane (Fluorochem, 95 %) and 200 ml of toluene. The mixture was heated at 80°C during 24 hours under magnetic stirring. 1 ml of water was then added and the mixture was heated 4 more hours at 80°C. The resulting suspension was filtered on a Buchner with fritted disc and washed with technical pentane (1 l) and disinfectol (1 l). The functionalized CNTs were then dried overnight in an oven at 100°C

Functionalized nanotubes 2 were modified by using the following protocol:
500 mg of MWNT7000 (Nanocyl ®, used as received) was used. In a glove box, on a 200 ml round bottom flask, 100 ml of dry decane (dried by refluxing on $P_2O_5$) was added to the MWNT7000. 1.5 grams of aluminium chloride (Sigma-Aldrich, 99,99 %, trace metals basis) and 2 grams of phenylacetyl chloride (Sigma-Aldrich, 98 %) was then added. The flask was closed with an argon balloon and heated at 90°C during 90 minutes under magnetic stirring. The suspension was filtered under vacuum (Sartorius Stedina Grade 391 filter), and washed with 500 ml of technical acetone, followed by 500 ml of technical pentane. The functionalized carbon nanotubes were dried overnight in an oven at a temperature of 100°C. These CNTs are referred to as CNTs-g-phenylacetyl chloride.

WAX8000 oligomer (Baker Hughes X-10081) was hydrobromated as follows: 2 grams of WAX8000 and 2 ml of hydrobromic acid (Sigma-Aldrich, 37 wt % in water) were added in 20 ml of decane and heated under magnetic stirring and argon atmosphere 4 hours at 60°C. The resulting solution was decanted and the organic part (containing the hydrobromated WAX8000) was removed. WAX-8000 has the following formula:

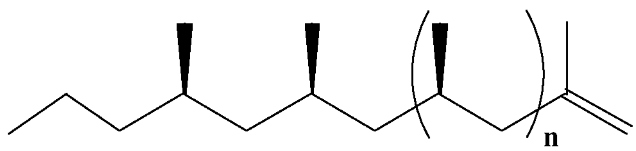

wherein n=13-186.

In a glove box, in a round bottom flask, 125 mg of CNTs-g-phenylacetyl chloride was added to 1 g of hydrobromated WAX8000 (10 ml of the decane solution of hydrobromated WAX8000), 0.5 gram of aluminium chloride in 40 ml of decane. The round bottom flask was then closed with an argon balloon and heated at 140°C during 3 hours. The suspension was filtered under vacuum (Sartorius Stedina Grade 391 filter), and washed with 200 ml of technical acetone, followed by 200 ml of technical pentane. The resulting CNTs-g-WAX8000 (510 mg) were dried overnight in an oven at 100°C.

The antioxidant mixture used in the examples consists of 2 parts of Irgafos 168 and 1 part of Irganox 1010.

All nanocomposites in the examples were formed by following procedure: 100mg of carbon nanotubes powder

were weighted and added to 9.90g of polymer fluff in a plastic bag. The carbon nanotubes and polyethylene fluff were physically mixed together in the plastic bag and 2500ppm of the antioxidant mixture was added to the mixture. The mixture was then transferred inside a hopper and was melt-extruded using a MiniLab twin-screw extruder from Haake (temperature = 220°C, screw speed = 20 rpm). At the exit of the extruder, the strand was collected and was finally cut into pellets using a Brabender pelletizer.

**Example 1**

Polymer composition 1 contains a fluff of a monomodal polyethylene homopolymer prepared in the presence of a Ziegler-Natta catalyst having a melt flow index of 19 g/10 min, measured according to ISO 1133 at 190°C and 2.16 kg. Polymer composition 1 has a density of 0.951 $g/cm^3$ measured according to ISO 1183, a viscosity $\eta$ of 500 Pa.s, a weight average molecular weight $M_w$ of 50 kDa and a molecular weight distribution MWD of 4.

Figure 1 shows an optical microscopy view of a nanocomposite comprising polymer composition 1 and 1% by weight of functionalized carbon nanotubes 1 as described above prepared using the procedure as described above. The largest nanoparticle aggregates have sizes of 56 $\mu$m, 45 $\mu$m, 45 $\mu$m and 39 $\mu$m.

**Comparative example 2**

Figure 2 shows an optical microscopy view of a nanocomposite comprising polymer composition 1 according to example 1 and 1% by weight of non-functionalized carbon nanotubes 0 as described above prepared using the procedure as described above. The largest nanoparticle aggregates have sizes of 274 $\mu$m and 174 $\mu$m.

The dispersion of nanotubes in example 1 is improved compared to comparative example 2. The size of nanotube aggregates is much smaller.

**Example 3**

Polymer composition 2 contains a commercially available (from TOTAL PETROCHEMICALS) fluff of a monomodal polypropylene homopolymer prepared in the presence of a metallocene catalyst having a melt flow index of 25 g/10 min, measured according to ISO 1133 at 230°C and 2.16 kg. Polymer composition 2 has a viscosity $\eta$ of 300 Pa.s, a weight average molecular weight $M_w$ of 150 kDa and a molecular weight distribution MWD of 2.

Figure 3 shows an optical microscopy view of a nanocomposite comprising polymer composition 2 and 1% by weight of functionalized carbon nanotubes 2 as described above prepared using the procedure as described above. The largest nanoparticle aggregate has a size of 20 $\mu$m.

**Comparative example 4**

Figure 4 shows an optical microscopy view of a nanocomposite comprising polymer composition 2 according to example 3 and 1% by weight of functionalized carbon nanotubes 2 as described above prepared using the procedure as described above. The largest nanoparticle aggregates have sizes of 454 $\mu$m and 288 $\mu$m.

The dispersion of nanotubes in example 3 is improved compared to comparative example 4. The size of nanotube aggregates is much smaller.

The results of the examples clearly show that the nanocomposite materials of the present invention show much improved homogeneity and dispersion when compared to the comparative examples.

## Claims

**1.** A nanocomposite comprising:

- a polymer composition, comprising at least one polymer; and
- at least 0.001 % by weight of carbon nanotubes, relative to the total weight of the nanocomposite;

wherein the carbon nanotubes are functionalized with a silane and the Si/C ratio of the carbon nanotubes is at most 0.01 or wherein the carbon nanotubes are functionalized with a modified polyolefin substituted by one or more substituents each independently selected from the group comprising $C_{2-6}$alkenyl, oxiranyl or hydroxyl;
wherein the silane has the general formula (I):

(I) $R^1\text{-Si}(R^2)(R^3)(R^4)$

wherein R1 is selected from the group comprising $C_{3-8}$alkyl, $C_{3-8}$alkenyl and $C_{3-8}$hydroxyalkyl, optionally substituted by vinyl, oxiranyl, hydroxyl, $NR^5R^6$, halogen, $C_{1-8}$alkyl, $C_{1-8}$alkenyl and $C_{1-8}$hydroxyalkyl; and $R^2$, $R^3$ and $R^4$ are each independently selected from hydrogen, hydroxyl, $C_{1-8}$alkyl, $C_{1-8}$alkoxy or $C_{1-8}$alkenyloxy, at least one of $R^2$, $R^3$ or $R^4$ being hydrogen; and $R^5$ and $R^6$ are each independently selected from hydrogen or $C_{1-8}$alkyl.

**2.** The nanocomposite according to claim 1, wherein $R^1$ is $C_{3-8}$alkenyl.

**3.** The nanocomposite according to claim 1, wherein the modified polyolefin is a polyolefin substituted by one or more $C_{2-6}$alkenyl.

**4.** The nanocomposite according to claim 1 or 3, wherein the modified polyolefin is polyethylene or polypropylene, or a copolymer thereof, substituted with $C_{2-6}$alkenyl, preferably vinyl.

**5.** The nanocomposite according to any of claims 1 to 4, wherein the carbon nanotube is physically or chemically activated before functionalization with the silane or modified polyolefin.

**6.** The nanocomposite according to any of claims 1 to 5, containing from 0.001 % to 25% by weight of carbon nanotubes, preferably from 0.002% to 20% by weight, preferably from 0.005% to 10% by weight, preferably from 0.01 % to 5% by weight, relative to the total weight of the nanocomposite.

**7.** The nanocomposite according to any of claims 1 to 6, wherein the polymer is selected from the group comprising polyolefins, polylactic acid, polystyrene, polyethylene terephthalate, polyurethane, and blends thereof.

**8.** The nanocomposite according to any of claims 1 to 7, wherein the polymer is a polyolefin; preferably wherein the polymer is polyethylene or polypropylene.

**9.** The nanocomposite according to claim 8, wherein the polyolefin has a multimodal molecular weight distribution, preferably a bimodal molecular weight distribution.

**10.** Formed articles comprising the nanocomposite of any of claims 1 to 9.

**11.** A process for preparing the nanocomposite according to any of claims 1 to 9, comprising the steps of:

(a) providing a polymer composition;
(b) providing at least 0.001 % by weight of carbon nanotubes, relative to the total weight of the nanocomposite, wherein the carbon nanotubes are functionalized with a silane and the Si/C ratio of the carbon nanotubes is at most 0.01, or wherein the carbon nanotubes are functionalized with a modified polyolefin substituted by one or more substituents each independently selected from the group comprising $C_{2-6}$alkenyl, oxiranyl or hydroxyl; and
(c) blending the functionalized carbon nanotubes with the polymer composition to obtain the nanocomposite according to any of claims 1 to 9.

**12.** The process according to claim 11, wherein the polymer composition for use in the process described above is in the form of a fluff, powder, or pellet, preferably in the form of a fluff.

**13.** The process according to claim 11 or 12, further comprising the step of:

(d) processing the nanocomposite obtained in step (c) at a temperature above the melt temperature of said nanocomposite;
wherein step (d) preferably comprises extruding a mixture of the polymer composition and the carbon nanotubes in an extruder.

**Patentansprüche**

**1.** Nanokomposit, umfassend:

- eine Polymerzusammensetzung, umfassend mindestens ein Polymer; und
- mindestens 0,001 Gew.-% Kohlenstoff-Nanoröhren, bezogen auf das Gesamtgewicht des Nanokomposits;

wobei die Kohlenstoff-Nanoröhren mit einem Silan funktionalisiert sind und das Si/C-Verhältnis der Kohlenstoff-Nanoröhren höchstens 0,01 beträgt oder wobei die Kohlenstoff-Nanoröhren mit einem modifizierten Polyolefin funktionalisiert sind, das durch einen oder mehrere Substituenten substituiert ist, unabhängig voneinander ausgewählt aus der Gruppe, bestehend aus $C_{2-6}$-Alkenyl, Oxiranyl oder Hydroxyl;
wobei das Silan die folgende allgemeine Formel (I) aufweist:

$$\text{(I)} \qquad R^1\text{-Si}(R^2)(R^3)(R^4),$$

wobei R1 ausgewählt ist aus der Gruppe, bestehend aus $C_{3-8}$-Alkyl, $C_{3-8}$-Alkenyl und $C_{3-8}$-Hydroxyalkyl, gegebenenfalls substituiert mit Vinyl, Oxiranyl, Hydroxyl, $NR^5R^1$, Halogen, $C_{1-8}$-Alkyl, $C_{1-8}$-Alkenyl und $C_{1-8}$-Hydroxyalkyl; und
$R^2$, $R^3$ und $R^4$ jeweils unabhängig ausgewählt sind aus Wasserstoff, Hydroxyl, $C_{1-8}$-Alkyl, $C_{1-8}$-Alkoxy oder $C_{1-8}$-Alkenyloxy, wobei mindestens eines von $R^2$, $R^3$ oder $R^4$ Wasserstoff ist; und $R^5$ und $R^6$ jeweils unabhängig ausgewählt sind aus Wasserstoff oder $C_{1-8}$-Alkyl.

**2.** Nanokomposit nach Anspruch 1, wobei $R^1$ $C_{3-8}$-Alkenyl ist.

**3.** Nanokomposit nach Anspruch 1, wobei das modifizierte Polyolefin ein Polyolefin ist, das mit einem oder mehreren $C_{2-6}$-Alkenylen substituiert ist.

**4.** Nanokomposit nach Anspruch 1 oder 3, wobei das modifizierte Polyolefin Polyethylen oder Polypropylen oder ein Copolymer davon, substituiert mit $C_{2-6}$-Alkenyl, vorzugsweise Vinyl, ist.

**5.** Nanokomposit nach einem der Ansprüche 1 bis 4, wobei die Kohlenstoff-Nanoröhre vor der Funktionalisierung mit dem Silan oder dem modifizierten Polyolefin physikalisch oder chemisch aktiviert wird.

**6.** Nanokomposit nach einem der Ansprüche 1 bis 5, enthaltend von 0,001 bis 25 Gew.-% Kohlenstoff-Nanoröhren, vorzugsweise von 0,002 bis 20 Gew.-%, vorzugsweise von 0,005 bis 10 Gew.-%, vorzugsweise von 0,01 bis 5 Gew.-%, bezogen auf das Gesamtgewicht des Nanokomposits.

**7.** Nanokomposit nach einem der Ansprüche 1 bis 6, wobei das Polymer ausgewählt ist aus der Gruppe, bestehend aus Polyolefinen, Polymilchsäure, Polystyrol, Polyethylenterephthalat, Polyurethan und Mischungen davon.

**8.** Nanokomposit nach einem der Ansprüche 1 bis 7, wobei das Polymer ein Polyolefin ist; vorzugsweise wobei das Polymer Polyethylen oder Polypropylen ist.

**9.** Nanokomposit nach Anspruch 8, wobei das Polyolefin eine multimodale Molekulargewichtsverteilung, vorzugsweise eine bimodale Molekulargewichtsverteilung, aufweist.

**10.** Geformte Gegenstände, umfassend das Nanokomposit nach einem der Ansprüche 1 bis 9.

**11.** Prozess zur Herstellung des Nanokomposits nach einem der Ansprüche 1 bis 9, umfassend die folgenden Schritte:

(a) Bereitstellen einer Polymerzusammensetzung;
(b) Bereitstellen von mindestens 0,001 Gew.-% Kohlenstoff-Nanoröhren, bezogen auf das Gesamtgewicht des Nanokomposits, wobei die Kohlenstoff-Nanoröhren mit einem Silan funktionalisiert sind und das Si/C-Verhältnis der Kohlenstoff-Nanoröhren höchstens 0,01 beträgt oder wobei die Kohlenstoff-Nanoröhren mit einem modifizierten Polyolefin funktionalisiert sind, das durch einen oder mehrere Substituenten substituiert ist, unabhängig voneinander ausgewählt aus der Gruppe, bestehend aus $C_{2-6}$-Alkenyl, Oxiranyl oder Hydroxyl; und
(c) Mischen derfunktionalisierten Kohlenstoff-Nanoröhren mit der Polymerzusammensetzung, um das Nanokomposit nach einem der Ansprüche 1 bis 9 zu erhalten.

**12.** Prozess nach Anspruch 11, wobei die Polymerzusammensetzung zur Verwendung in dem oben beschriebenen Prozess in Form eines Flaums, Pulvers oder Kügelchen vorliegt, vorzugsweise in Form eines Flaums.

**13.** Prozess nach Anspruch 11 oder 12, ferner umfassend den folgenden Schritt:

(d) Verarbeiten des in Schritt (c) erhaltenen Nanokomposits bei einer Temperatur oberhalb der Schmelztemperatur des Nanokomposits;

wobei Schritt (d) vorzugsweise das Extrudieren einer Mischung der Polymerzusammensetzung und der Kohlenstoff-Nanoröhren in einem Extruder umfasst.

## Revendications

**1.** Nanocomposite comprenant :

- une composition de polymère, comprenant au moins un polymère ; et
- au moins 0,001 % en poids de nanotubes de carbone, par rapport au poids total du nanocomposite ;

dans lequel les nanotubes de carbone sont fonctionnalisés avec un silane et le rapport Si/C des nanotubes de carbone est au maximum de 0,01 ou dans lequel les nanotubes de carbone sont fonctionnalisés avec une polyoléfine modifiée substituée par un ou plusieurs substituants choisis chacun indépendamment dans le groupe comprenant alcényle en $C_{2-6}$, oxiranyle ou hydroxyle ;
dans lequel le silane a la formule générale (I) :

(I) $R^1\text{-}Si(R^2)(R^3)(R^4)$

dans laquelle R1 est choisi dans le groupe comprenant un alkyle en $C_{3-8}$, alcényle en $C_{3-8}$ et hydroxyalkyle en $C_{3-8}$, éventuellement substitué par vinyle, oxiranyle, hydroxy, $NR^5R^1$, halogène, alkyle en $C_{1-8}$, alcényle en $C_{1-8}$ et hydroxyalkyle en $C_{1-8}$ ; et
$R^2$, $R^3$ et $R^4$ sont chacun indépendamment choisis parmi hydrogène, hydroxyle, alkyle en $C_{1-8}$, alcoxy en $C_{1-8}$ ou alcényloxy en $C_{1-8}$, au moins l'un de $R^2$, $R^3$ ou $R^4$ étant hydrogène ; et
$R^5$ et $R^6$ sont chacun choisis indépendamment parmi hydrogène ou alkyle en $C_{1-8}$.

**2.** Nanocomposite selon la revendication 1, dans lequel $R^1$ est un alcényle en $C_{3-8}$.

**3.** Nanocomposite selon la revendication 1, dans lequel la polyoléfine modifiée est une polyoléfine substituée par un ou plusieurs alcényles en $C_{2-6}$.

**4.** Nanocomposite selon la revendication 1 ou 3, dans lequel la polyoléfine modifiée est un polyéthylène ou un polypropylène ou un de leurs copolymères, substitué par un alcényle en $C_{2-6}$, de préférence un vinyle.

**5.** Nanocomposite selon l'une quelconque des revendications 1 à 4, dans lequel le nanotube de carbone est activé physiquement ou chimiquement avant la fonctionnalisation avec le silane ou la polyoléfine modifiée.

**6.** Nanocomposite selon l'une quelconque des revendications 1 à 5, contenant de 0,001 % à 25 % en poids de nanotubes de carbone, de préférence de 0,002 % à 20 % en poids, de préférence de 0,005 % à 10 % en poids, de préférence de 0,01 % à 5 % en poids, par rapport au poids total du nanocomposite.

**7.** Nanocomposite selon l'une quelconque des revendications 1 à 6, dans lequel le polymère est choisi dans le groupe comprenant les polyoléfines, l'acide polylactique, le polystyrène, le téréphtalate de polyéthylène, le polyuréthane et leurs mélanges.

**8.** Nanocomposite selon l'une quelconque des revendications 1 à 7, dans lequel le polymère est une polyoléfine ; de préférence dans lequel le polymère est du polyéthylène ou du polypropylène.

**9.** Nanocomposite selon la revendication 8, dans lequel la polyoléfine présente une distribution de poids moléculaire multimodale, de préférence une distribution de poids moléculaire bimodale.

**10.** Articles formés comprenant le nanocomposite selon l'une quelconque des revendications 1 à 9.

**11.** Procédé de préparation du nanocomposite selon l'une quelconque des revendications 1 à 9, comprenant les étapes consistant à :

(a) fournir une composition de polymère ;
(b) fournir au moins 0,001 % en poids de nanotubes de carbone, par rapport au poids total du nanocomposite, dans lequel les nanotubes de carbone sont fonctionnalisés avec un silane et le rapport Si/C des nanotubes de carbone est au maximum de 0,01 ou dans lequel les nanotubes de carbone sont fonctionnalisés avec une polyoléfine modifiée substituée par un ou plusieurs substituants choisis chacun indépendamment dans le groupe comprenant alcényle en $C_{2-6}$, oxiranyle ou hydroxyle ; et
(c) mélanger les nanotubes de carbone fonctionnalisés avec la composition polymère pour obtenir le nanocomposite selon l'une quelconque des revendications 1 à 9.

**12.** Procédé selon la revendication 11, dans lequel la composition de polymère destinée à être utilisée dans le procédé décrit ci-dessus est sous la forme d'une peluche, d'une poudre ou d'une pastille, de préférence sous la forme d'une peluche.

**13.** Procédé selon la revendication 11 ou 12, comprenant en outre l'étape consistant à :

(d) traiter le nanocomposite obtenu à l'étape (c) à une température supérieure à la température de fusion dudit nanocomposite ;

dans lequel l'étape (d) comprend de préférence l'extrusion d'un mélange de la composition de polymère et des nanotubes de carbone dans une extrudeuse.

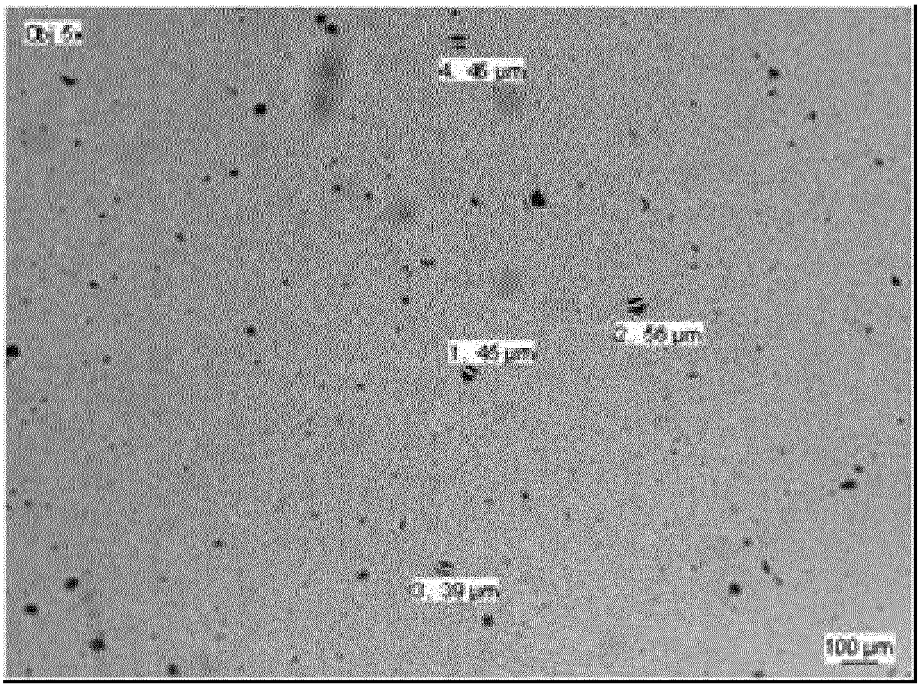

FIG. 1

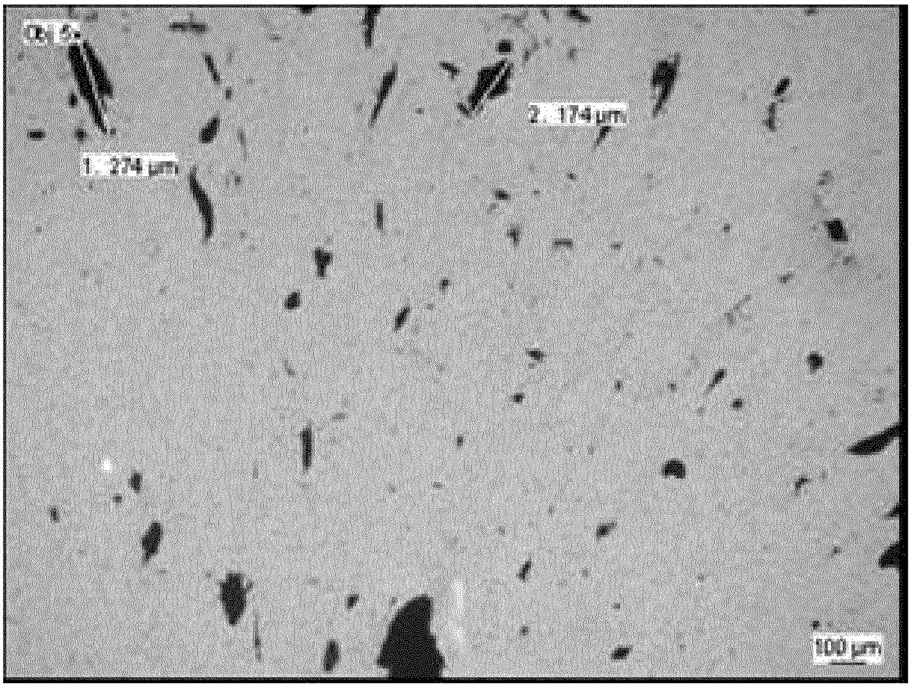


FIG. 2

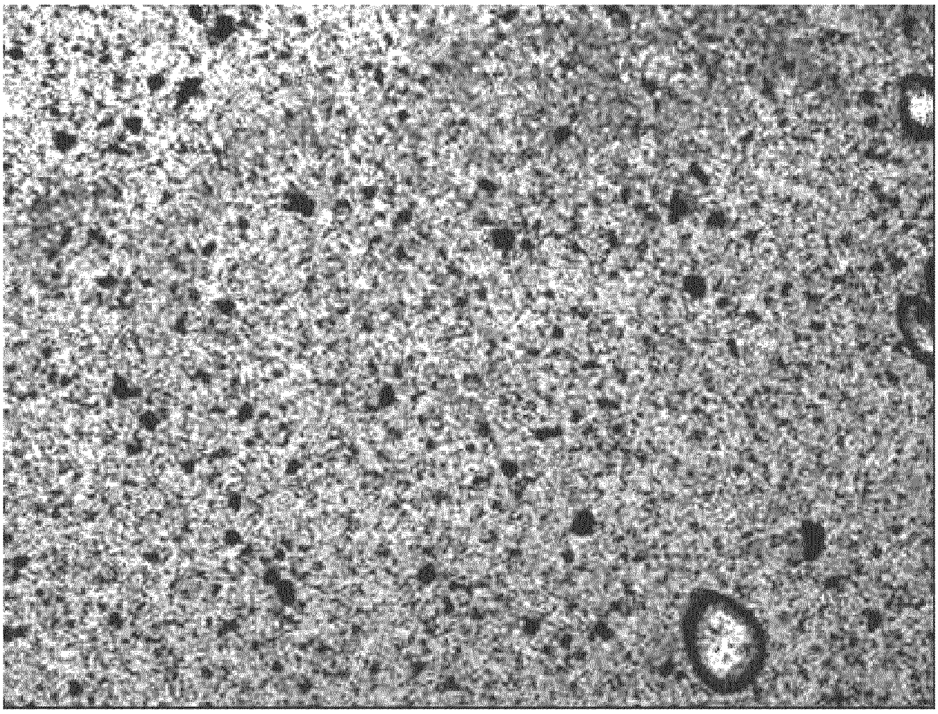

FIG. 3

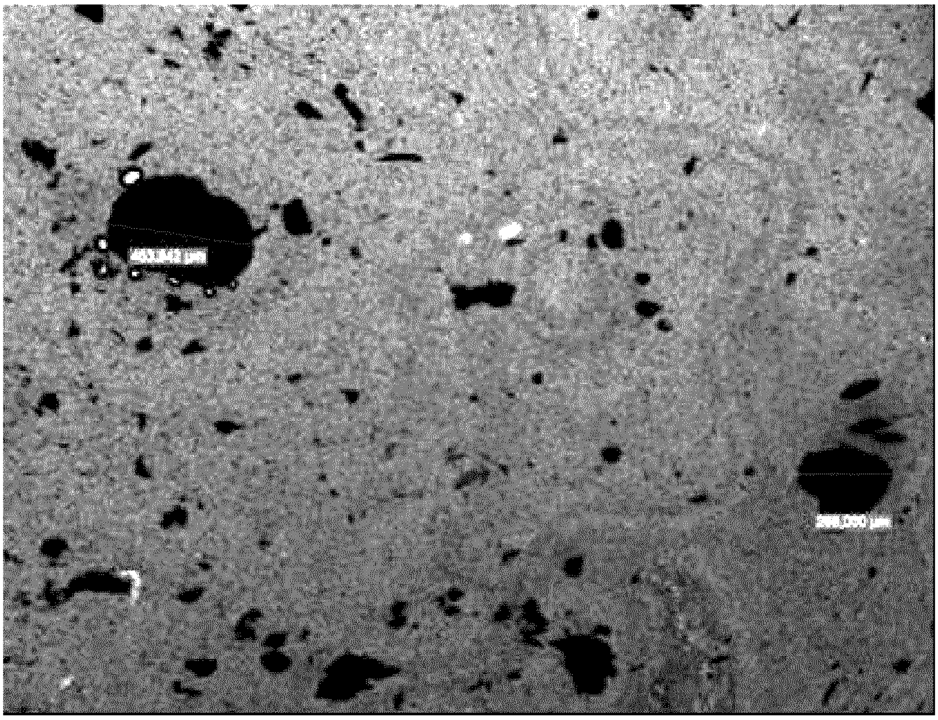

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 6930071 B
- US 6864207 B

### Non-patent literature cited in the description

- Plastics Additives Handbook. Hanser Publishers, 2001
- *CHEMICAL ABSTRACTS,* 128961-68-2
- *CHEMICAL ABSTRACTS,* 68411-46-1